# EUROPEAN PATENT APPLICATION

(11) **EP 4 403 872 A1**
(43) Date of publication of application: **24.07.2024**
(21) Application number: 22869751.2
(22) Date of filing: 19.08.2022
(51) Int. Cl.: G01B 11/02, G06T 7/60, G06F 3/0482

(54) **DIMENSION MEASUREMENT DEVICE, DIMENSION MEASUREMENT METHOD, AND PROGRAM**

(30) Priority: 14.09.2021 JP 2021149474
(71) Applicant: Panasonic Intellectual Property Management Co., Ltd., Kadoma-shi, Osaka 571-0057 (JP)
(72) Inventor: FUKUDA, Masaki, Kadoma-shi, Osaka 571-0057 (JP); MATSUNOBU, Toru, Kadoma-shi, Osaka 571-0057 (JP)
(74) Representative: Novagraaf International SA
(86) International application number: PCT/JP2022/031368
(87) International publication number: WO 2023/042604

(57) **Abstract**

A dimension measurement device (100) includes a processor and memory. The processor, using the memory, obtains a three-dimensional model of a target object (S61), selects a basic shape from a plurality of basic shapes, each of the plurality of basic shapes being a corresponding candidate of a three-dimensional shape (S62), fits the selected basic shape to the three-dimensional model (S63), and measures a dimension of the target object using the basic shape that has been fitted (S64). For example, a dimension measurement device (100) may cause a display to display a display content for a user to specify a basic shape from the plurality of basic shapes, and select the basic shape from the plurality of basic shapes based on information specified by the user via an input interface.

## Description

### [Technical Field]

The present disclosure relates to a dimension measurement device, a dimension measurement method, and a program.

### [Background Art]

Techniques of measuring dimensions of a target object using a three-dimensional model such as point cloud data are known. Patent Literature (PTL) 1 discloses a method of measuring the dimensions using point cloud obtained by a laser scanner, for example.

### [Citation List]

### [Patent Literature]

[PTL 1] Japanese Unexamined Patent Application Publication No. 2019-211419

### [Summary of Invention]

### [Technical Problem]

It is desired that accuracy is improved in such a measurement using the three-dimensional model. A purpose of the present disclosure is to provide a dimension measurement device, a dimension measurement method, or a program, which can improve the accuracy in the measurement.

### [Solution to Problem]

A dimension measurement device according to an aspect of the present disclosure includes a processor; and memory, in which using the memory, the processor: obtains a three-dimensional model of a target object; selects a basic shape from a plurality of basic shapes, each of the plurality of basic shapes being a corresponding candidate of a three-dimensional shape; fits the basic shape selected to the three-dimensional model; and measures a dimension of the target object using the basic shape that has been fitted.

### [Advantageous Effects of Invention]

The present disclosure can provide a dimension measurement device or a dimension measurement method, which can reduce processing volume.

### [Brief Description of Drawings]

[FIG. 1]

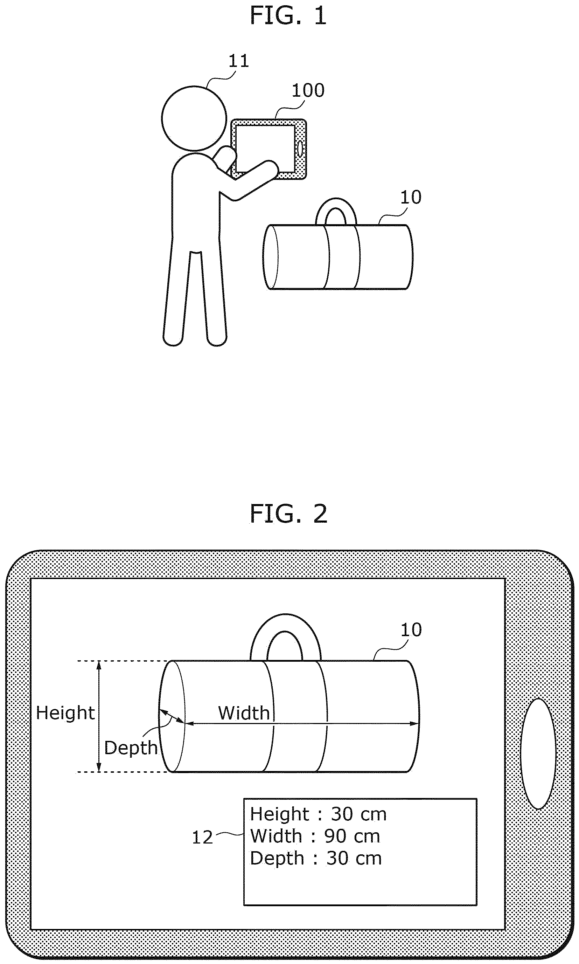

   FIG. 1 is a diagram showing an example of dimension measurement according to an embodiment.
[FIG. 2]
   FIG. 2 is a diagram showing a screen example indicating a result of the dimension measurement according to the embodiment.
[FIG. 3]

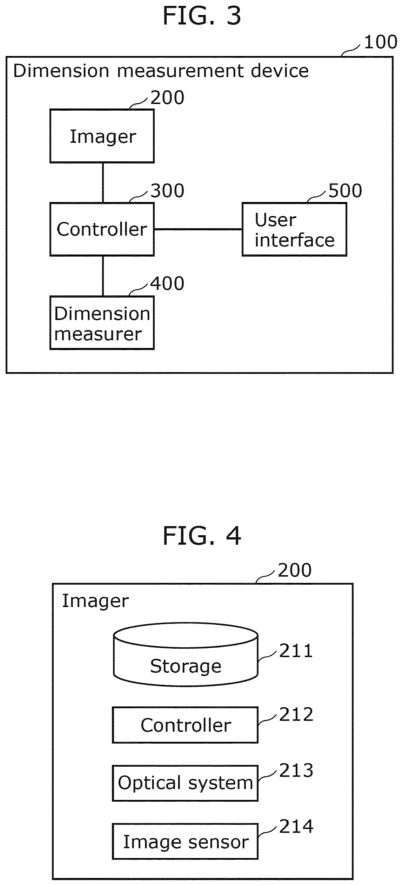

   FIG. 3 is a block diagram showing a dimension measurement device according to the embodiment.
[FIG. 4]
   FIG. 4 is a block diagram showing an imager according to the embodiment.
[FIG. 5]

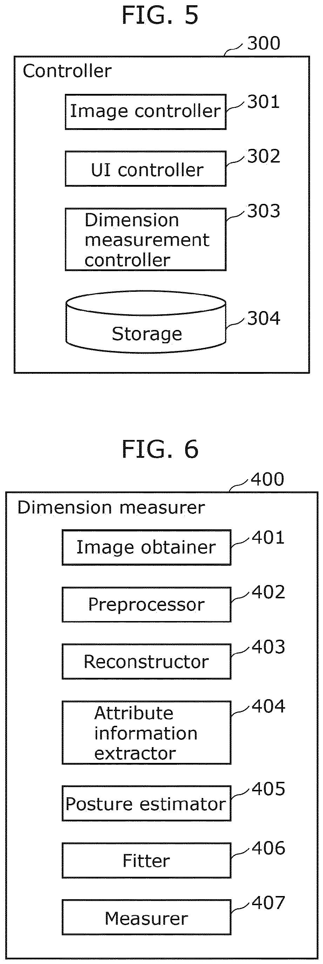

   FIG. 5 is a block diagram showing a controller according to the embodiment.
[FIG. 6]
   FIG. 6 is a block diagram showing a dimension measurer according to the embodiment.
[FIG. 7]

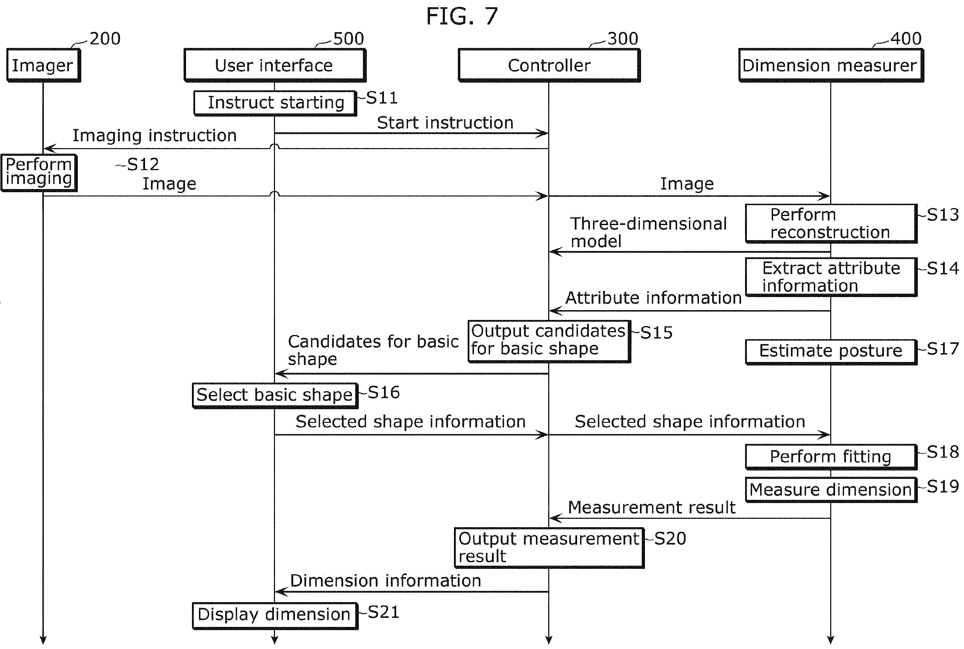

   FIG. 7 is a sequence diagram showing dimension measurement processing according to the embodiment.
[FIG. 8]

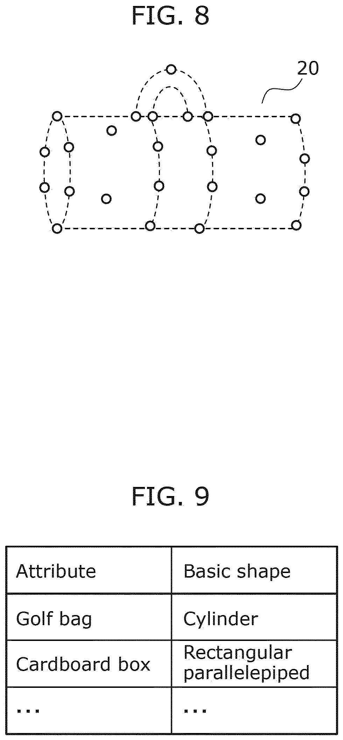

   FIG. 8 is a diagram showing an example of a three-dimensional model according to the embodiment.
[FIG. 9]
   FIG. 9 is a diagram showing an example of correspondence between attributes and basic shapes according to the embodiment.
[FIG. 10]

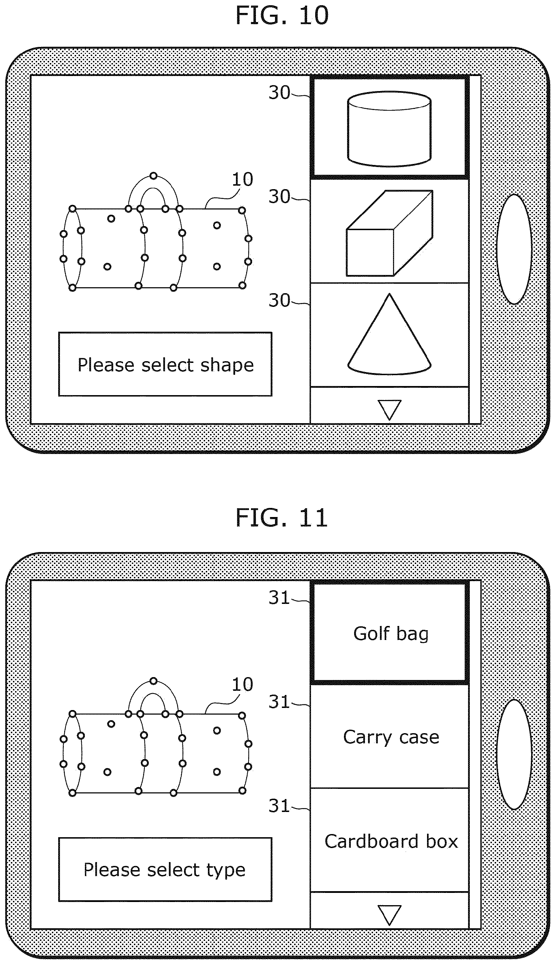

   FIG. 10 is a diagram showing a screen example at a time of selecting the basic shape according to the embodiment.
[FIG. 11]
   FIG. 11 is a diagram showing a screen example at a time of selecting the basic shape according to the embodiment.
[FIG. 12]

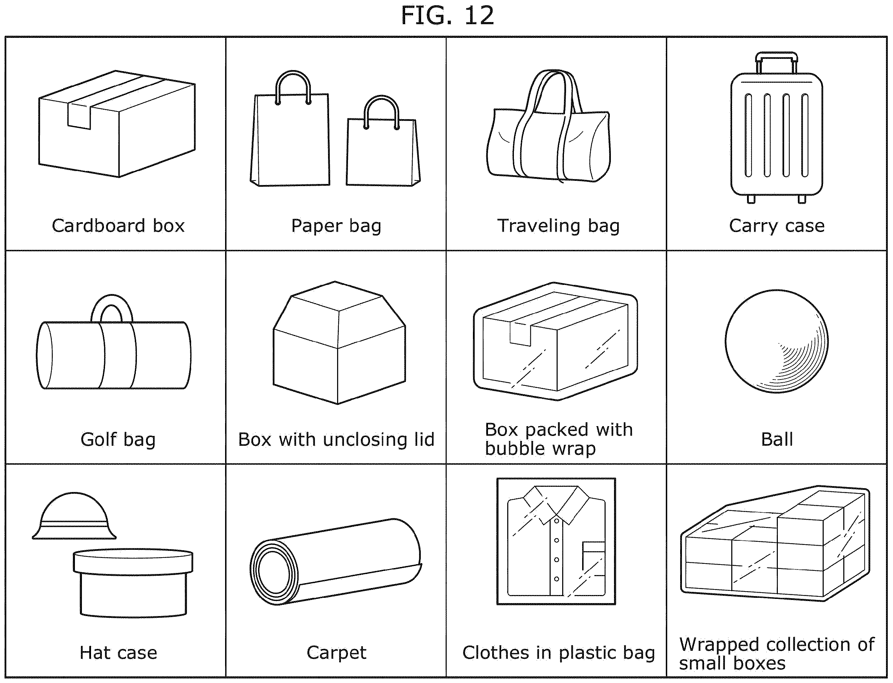

   FIG. 12 is a diagram showing examples of the attributes according to the embodiment.
[FIG. 13]

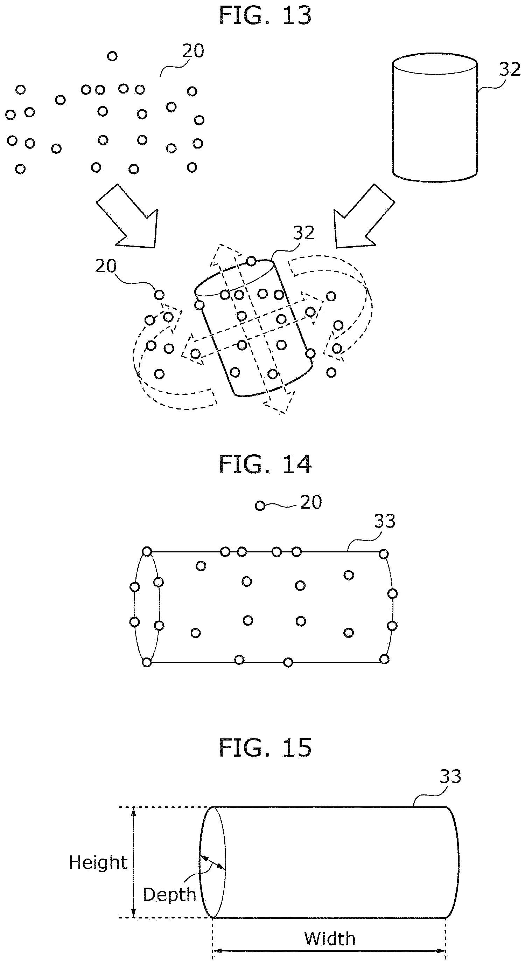

   FIG. 13 is a diagram schematically showing fitting processing according to the embodiment.
[FIG. 14]
   FIG. 14 is a diagram showing an example of the basic shape that has undergone the fitting processing, according to the embodiment.
[FIG. 15]
   FIG. 15 is a diagram for illustrating dimension measurement processing according to the embodiment.
[FIG. 16]

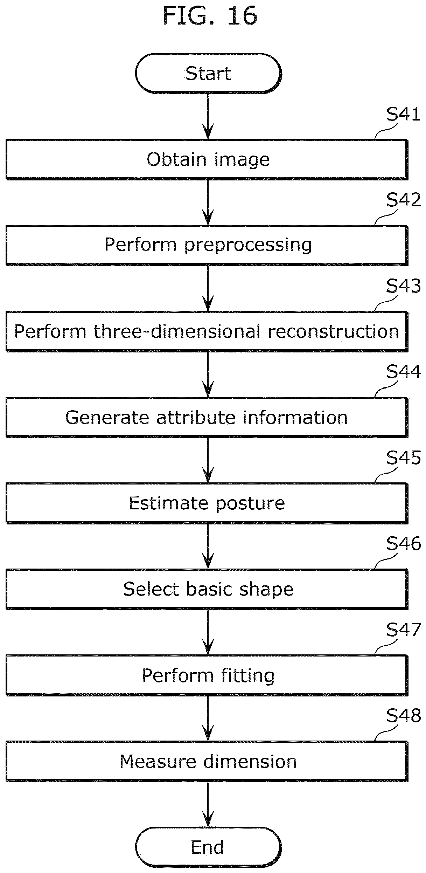

   FIG. 16 is a flowchart of the dimension measurement processing according to the embodiment.
[FIG. 17]

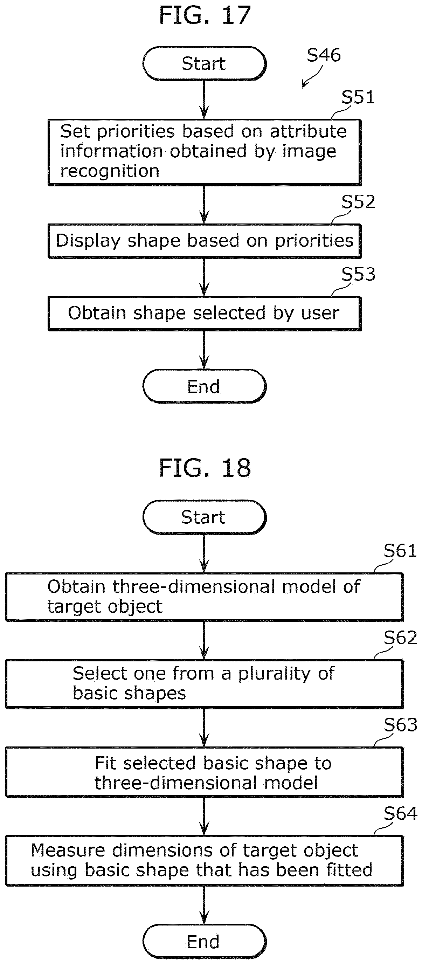

   FIG. 17 is a flowchart of processing of selecting the basic shape according to the embodiment.
[FIG. 18]
   FIG. 18 is a flowchart of the dimension measurement processing according to the embodiment.

### [Description of Embodiments]

A dimension measurement device according to an aspect of the present disclosure includes a processor; and memory, in which using the memory, the processor: obtains a three-dimensional model of a target object; selects a basic shape from a plurality of basic shapes, each of the plurality of basic shapes being a corresponding candidate of a three-dimensional shape; fits the basic shape selected to the three-dimensional model; and measures a dimension of the target object using the basic shape that has been fitted.

With this configuration, the dimension measurement device fits the basic shape selected from the plurality of candidates of the three-dimensional shape of a target object to the three-dimensional model, and performs dimension measurement using the basic shape that has been fitted, thereby improving accuracy.

For example, the processor may: cause a display to display a display content for a user to specify a basic shape from the plurality of basic shapes; and select the basic shape from the plurality of basic shapes based on information specified by the user via an input interface.

With this configuration, the dimension measurement device can select a basic shape to be fitted based on user's selection, thereby easily improving the accuracy in fitting. Therefore, the accuracy of the dimension measurement using the basic shape that has undergone the fitting can be improved.

For example, the display content may be for the user to specify the three-dimensional shape of the target object, and the processor may select a basic shape of the three-dimensional shape from the plurality of basic shapes, the basic shape being specified by the user via the input interface.

With this configuration, a basic shape suitable for fitting can be selected with high accuracy by a user directly specifying the shape.

For example, the display content may be for the user to specify a type of the target object, and the processor may select, from the plurality of basic shapes, a basic shape that is associated in advance with the type specified by the user via the input interface.

With this configuration, a user can intuitively perform a selection operation, thereby improving the user's convenience.

For example, the processor may: determine a type of the target object based on image recognition carried out on an image of the target object; and select, from the plurality of basic shapes, a basic shape that is associated in advance with the type determined.

With this configuration, the dimension measurement device can automatically select the basic shape without depending on user's input.

For example, the processor may select, from the plurality of basic shapes, a basic shape that is associated in advance with a location where the target object or the dimension measurement device is present.

With this configuration, the dimension measurement device can automatically select the basic shape without depending on the user's input.

For example, the processor may select a basic shape from the plurality of basic shapes, based on a result of fitting of the three-dimensional model to each of the plurality of basic shapes.

With this configuration, the dimension measurement device can automatically select the basic shape without depending on the user's input.

For example, the processor may: determine posture of the target object; and fit the three-dimensional model to the basic shape selected, using the posture determined.

With this configuration, the dimension measurement device can reduce a volume of the fitting processing or improving the accuracy.

In addition, a dimension measurement method according to an aspect of the present disclosure may include: obtaining a three-dimensional model of a target object; selecting a basic shape from a plurality of basic shapes, each of the plurality of basic shapes being a corresponding candidate of a three-dimensional shape; fitting the basic shape selected to the three-dimensional model; and measuring a dimension of the target object using the basic shape that has been fitted.

According to the dimension measurement method, a basic shape selected from the plurality of candidates of the three-dimensional shape of the target object is fitted to the three-dimensional model, and the dimension measurement is performed using the basic shape that has been fitted, thereby improving the accuracy of the measurement.

In addition, a program according to an aspect of the present disclosure causes a computer to execute the dimension measurement method.

It should be noted that these comprehensive or specific embodiments may be embodied by a system, a method, an integrated circuit, a computer program, or a computer-readable recording medium such as a CD-ROM. The system, the method, the integrated circuit, the computer program and the recording medium may be used in any combination.

Hereinafter, embodiments will be specifically described with reference to the drawings. Each of the embodiments described below represents a specific example of the present disclosure. Numerical values, shapes, materials, structural components, arrangement positions and connection forms of the structural components, steps, the order of the steps, and the like described in the following embodiments are examples, and do not intend to restrict the present disclosure. Furthermore, among the structural components in the following embodiments, structural components that are not described in independent claims will be described as optional structural components.

### (Embodiments)

At collection of items to be delivered, operation efficiency can be improved by easily measuring dimensions of the items to be delivered. A device and method which can, for example, measure the dimensions of a target object from an image shot by a camera on a mobile terminal such as a tablet terminal or a smartphone will be described.

FIG. 1 is a diagram showing an example of dimension measurement according to the present embodiment. FIG. 1 shows that user 11 (a delivery worker or a delivery requester, for example) measures the dimensions of target object 10 (a golf bag in this example) using dimension measurement device 100 that is a mobile terminal.

FIG. 2 is a diagram showing an example of a display screen of dimension measurement device 100 in the above scene. For example, as shown in FIG. 2, when a user shoots target object 10, dimensions 12 (height, width, and depth in this example) of target object 10 are displayed.

Although an example of measurement of the dimensions of a target object to be delivered will be mainly described below, dimension measurement device 100 according to the present embodiment can be applied to measurement of the dimensions of any target object. For example, dimension measurement device 100 can be applied to dimension measurement of building structures and the like at construction sites.

Hereinafter, a configuration of dimension measurement device 100 according to the present embodiment will be described. FIG. 3 is a block diagram showing dimension measurement device 100. Dimension measurement device 100 includes imager 200, controller 300, dimension measurer 400, and user interface 500.

Imager 200 shoots images (moving images or still images). Controller 300 controls imager 200, dimension measurer 400, and user interface 500. Dimension measurer 400 generates a three-dimensional model (point cloud data, for example) by performing three-dimensional reconstruction using the image shot by imager 200. In addition, dimension measurer 400 selects one from a plurality of candidates of a basic shape of the three-dimensional shape, fits the selected basic shape to the three-dimensional model, and measures the dimensions of the target object by using the basic shape that has been fitted.

User interface 500 accepts input by a user. User interface 500 also presents information to the user. User interface 500 is a display and a touch panel, for example. It should be noted that user interface 500 is not limited to the display or the touch panel, but may be any user interface. User interface 500 may include, for example, at least one of a keyboard, a mouse, a microphone, a loudspeaker, and the like.

FIG. 4 is a block diagram showing a configuration of imager 200. Imager 200 is, for example, a camera, and includes storage 211, controller 212, optical system 213, and image sensor 214.

Storage 211 stores a program to be read and executed by controller 212. In addition, storage 211 temporarily stores image data of an image region shot using image sensor 214, meta information such as a time stamp attached to the image data, camera parameters of imager 200, and shooting settings such as a frame rate or resolution during application.

Such storage 211 is embodied using, for example, a rewritable non-volatile semiconductor memory, such as a flash memory. In addition, a non-rewritable read-only memory (ROM) or a volatile random access memory (RAM) may also be used as storage 211, depending on necessity of rewriting of the stored data or on a required period of the storage.

Controller 212 is embodied using, for example, a central processing unit (CPU), and controls each structural component included in imager 200 by reading and executing the program stored in storage 211 described above, thereby achieving an imaging function and other functions. It should be noted that controller 212 may be embodied by a dedicated circuit that controls each structural component included in imager 200 to implement the imaging function and other functions. In other words, controller 212 may be embodied by software or hardware.

Optical system 213 is a structural component that forms, on image sensor 214, an image of light from the image region, and is embodied using an optical element including a lens. A focal distance and an angle of view of optical system 213 may be changeable. In addition, a wide angle lens or an ultrawide angle lens such as a fisheye lens may be used.

Image sensor 214 is embodied by a solid-state imaging element such as a charge coupled device (CCD) image sensor or a complementary metal-oxide semiconductor (CMOS) image sensor or a metal-oxide semiconductor (MOS) image sensor, which receive light collected by the optical system on a light receiving surface and converts the received light into an electrical signal representing an image.

FIG. 5 is a block diagram showing a configuration of controller 300. Controller 300 includes image controller 301, UI controller 302, dimension measurement controller 303, and storage 304.

Controller 300 controls imager 200, and inputs/outputs signals from/to user interface 500. In addition, controller 300 causes dimension measurer 400 to measure dimensions on data received from imager 200.

Such controller 300 is embodied using CPU, for example. Storage 304 is embodied by a hard disk drive, various semiconductor memories, or a combination of them. Storage 304 stores programs to be read and executed by controller 300. In addition, storage 304 stores data that is received from imager 200 and is a target of processing by controller 300.

Controller 300 controls imager 200 and dimension measurer 400 by reading and executing a program stored in storage 304. Furthermore, controller 300 executes processing in response to instructions from a user regarding the control and processing.

Furthermore, one of the processing may include a dimension measurement instruction. UI controller 302 is a functional component embodied by controller 300 executing a program for obtaining instructions from a user. Furthermore, dimension measurement controller 303 is a functional component embodied by controller 300 executing a program for issuing a dimension measurement instruction.

It should be noted that image controller 301, UI controller 302, and dimension measurement controller 303 may be embodied by dedicated circuits that implement imaging control, UI control, dimension measurement instructions, dimension measurement processing, and the like. In other words, controller 300 may be embodied by software or hardware.

Image controller 301 causes, for example, imager 200 to image a three-dimensional space, which is the image region, at a plurality of different timings.

UI controller 302 sends imaging status information provided from imager 200 to user interface 500 and obtains input from the user. The input from the user is: a result of selection of data to be subjected to the dimension measurement; advisability of the dimension measurement processing; or a combination of them. If the input from the user relates to the advisability of the dimension measurement processing, UI controller 302 outputs determination on the advisability of the dimension measurement processing to dimension measurement controller 303, for example.

Dimension measurement controller 303 causes dimension measurer 400 to perform the dimension measurement processing based on, for example, the determination on the advisability of the dimension measurement processing, which is received from UI controller 302. Furthermore, dimension measurement controller 303 may cause dimension measurer 400 to perform the dimension measurement processing based on a result of the selection of data to be subjected to the dimension measurement. A specific example of the processing by dimension measurement controller 303 will be described later.

FIG. 6 is a block diagram showing a configuration of dimension measurer 400. Dimension measurer 400 includes image obtainer 401, preprocessor 402, reconstructor 403, attribute information extractor 404, posture estimator 405, fitter 406, and measurer 407.

Dimension measurer 400 performs processing on data received via controller 300. Specifically, dimension measurer 400 performs dimension measurement processing on a target object that is present in a predetermined space and is imaged by imager 200.

Image obtainer 401 obtains a plurality of images shot by imager 200. Each of the plurality of images may be a still image or may be composed of a moving image.

Preprocessor 402 performs image preprocessing. The image preprocessing is, for example, brightness adjustment, noise removal, resolution conversion, color space conversion, lens distortion correction, projective conversion, affine transformation, edge enhancement processing, trimming processing, or a combination of them. The image preprocessing may be performed in synchronization with timing at which the dimension measurement processing is performed, or may be performed in advance. A plurality of preprocessed images obtained by preprocessor 402 performing image preprocessing may be stored in storage 304 included in controller 300. It should be noted that each preprocessing by preprocessor 402 does not necessarily have to be performed. Accordingly, dimension measurer 400 may not include preprocessor 402.

Reconstructor 403 calculates a three-dimensional shape of a predetermined space using a plurality of images shot by imager 200, for the predetermined space. Reconstructor 403 detects a feature point of each of the plurality of images shot by imager 200, uses the obtained feature points to correlate the images with each other, and calculates a three-dimensional model of a predetermined space by geometric calculation from the correspondence relationship, for example. For example, the three-dimensional model is point cloud data that includes a plurality of three-dimensional points. It should be noted that the three-dimensional model is not limited to the point cloud, but may be a track group, a mesh, or a voxel.

Attribute information extractor 404 extracts attribute information from a plurality of images imaged by imager 200 or the three-dimensional model reconstructed by reconstructor 403. Here, the attribute information indicates the attribute (type) of a target object to which a pixel in an image or a three-dimensional point in the three-dimensional model belongs. For example, attribute information extractor 404 determines the attribute of a target object in the image, using a known image recognition technique.

Attribute information extractor 404 may, for example, estimate the attribute of each point based on information of surrounding points, for the three-dimensional point group, and calculate attribute information indicating the estimated attribute. Furthermore, attribute information extractor 404 estimates, for image data, the attribute information of the target object imaged in each image based on the information of surrounding pixels, and associates the estimated attribute information with each minimum constituent unit of the reconstructed three-dimensional model. Furthermore, attribute information extractor 404 may obtain the three-dimensional model reconstructed by reconstructor 403. Still furthermore, attribute information extractor 404 may perform processing before performing the processing of reconstructor 403. In addition, reconstructor 403 may use the attribute information obtained by attribute information extractor 404 to calculate only the three-dimensional shape of a region of any attribute. It should be noted that attribute information extraction processing by attribute information extractor 404 does not necessarily have to be executed. Therefore, dimension measurer 400 may not include attribute information extractor 404.

Posture estimator 405 uses the plurality of images imaged by imager 200 to estimate posture of the target object. For example, posture estimator 405 estimates the posture of an image for the image region indicating an arbitrary attribute calculated by attribute information extractor 404, and outputs the estimated posture as posture estimation information to fitter 406 at a later stage. If the target object is cylindrical, for example, the posture of the target object can be determined by determining a long side and a short side of the target object in an image shot from the side. Alternatively, the posture information may be determined using a known image recognition technique, in addition to detection of the attribute of the target object. It should be noted that the posture information may be two-dimensional posture on an image or three-dimensional posture.

In applications such as construction sites, posture estimator 405 may determine the posture of a target object using design information. Here, the design information is computer-aided design (CAD) data of a building structure, for example. In such a case, a shooting position and direction when a shooting device has shot the image are known, for example, and the posture of the target object to be shot in the image can be detected based on the information.

Fitter 406 performs fitting processing to fit a basic shape to the three-dimensional model reconstructed by reconstructor 403.

Measurer 407 calculates dimensions of the target object, using the basic shape that has undergone the fitting processing. The target object to be measured may be selected by a user, or may be automatically selected. Calculation results are displayed on user interface 500. Specifically, measurer 407 calculates a distance between two surfaces of the basic shape, sizes of the surfaces, length of the surfaces, or the like, by using the basic shape that has undergone the fitting processing. For example, if the basic shape is a cylinder, measurer 407 calculates the distance between a top surface and a bottom surface of the cylinder to thereby calculate the height of the cylinder, and outputs the calculated height of the cylinder and a diameter of the top surface of the cylinder as the dimensions.

FIG. 7 is a sequence diagram showing dimension measurement processing in dimension measurement device 100. First, a user issues an instruction to start shooting via user interface 500 (S11). For example, the start instruction is provided by selecting a menu on a screen, activating an application, or the like.

Upon receiving the start instruction, controller 300 sends an imaging instruction to imager 200. Imager 200 images a plurality of images (still images) in accordance with the imaging instruction (S12). Here, a plurality of obtained images (still images) are two or more images of the same target object shot from different viewpoints. For example, a user shoots images of a target object (a golf bag, for example) from different positions using a single imaging device (a tablet terminal, for example).

It should be noted that imager 200 is not necessarily included in dimension measurement device 100, and may be included in a terminal different from a terminal in which dimension measurement device 100 is included. In such a case, the image shot by imager 200 is sent to dimension measurement device 100 via any communication means such as wireless communication.

The plurality of shot images are sent to dimension measurer 400 via controller 300. Dimension measurer 400 performs three-dimensional reconstruction using a plurality of images to generate a three-dimensional model (S13). The generated three-dimensional model is sent to controller 300. FIG. 8 is a diagram showing an example of the three-dimensional model. Three-dimensional model 20 is composed of a plurality of points each having three-dimensional coordinates. Although a shape of the target object (golf bag) is shown, in the drawing, by a broken line for reference, the information shown by the broken line is not included in three-dimensional model 20. Furthermore, each point may have not only position information (three-dimensional coordinates, for example) but also attribute information such as a color and a normal vector.

Furthermore, dimension measurer 400 generates attribute information indicating an attribute (type) of the target object, using the plurality of images (S14). For example, attribute information extractor 404 determines the attribute of the target object in the image using a known image recognition technique. The generated attribute information is sent to controller 300.

Next, controller 300 outputs a plurality of candidates of the basic shape that fits the three-dimensional model, to user interface 500 (S15). Here, the basic shape is a three-dimensional shape such as a rectangular parallelepiped, a polygonal prism, a polygonal pyramid, a circle, a cylinder, a cone, and a spherical crown. Furthermore, the basic shape may be a shape expressed by a combination of them. In other words, the basic shape is a three-dimensional shape composed of one or more planes, one or more curved surfaces, or a combination of them.

Specifically, controller 300 sets priorities for a plurality of predetermined candidates of the basic shape using the attribute information. For example, one or more candidates of the basic shape are associated with each of the plurality of attributes in advance. FIG. 9 is a diagram showing an example of correspondence between attributes and the candidates of the basic shape. For example, as shown in FIG. 9, a "golf bag" is associated with a "cylinder," and a "cardboard box" is associated with a "rectangular parallelepiped". Controller 300 sets a high priority for candidates associated with an attribute of the target object.

When image recognition is used to determine the attribute information, the priority may be set based on a probability obtained by the image recognition. Generally, the probability (percentage) of a plurality of attributes is calculated for a single target object, in the image recognition. Accordingly, the priority of a basic shape associated with an attribute with higher probability may be set higher. The determined candidates and priorities are sent to user interface 500.

Next, a user selects the basic shape via user interface 500 (S16). FIG. 10 is a diagram showing an example of a screen for the selection. As shown in FIG. 10, a shot image of target object 10 and a plurality of candidates of basic shape 30 are displayed, for example. Although a three-dimensional model is displayed with being superimposed on the image in FIG. 10, the three-dimensional model does not need to be displayed. At this time, the display order of a plurality of basic shapes 30 is determined according to the priorities determined by controller 300. Specifically, a basic shape 30 with a higher priority is displayed at a higher position so that it is more likely to be selected. It should be noted that basic shapes whose priorities are lower than a predetermined threshold value may be excluded, and only basic shapes whose priorities are higher than the threshold value may be displayed.

FIG. 11 is a diagram showing another example of the screen for the selection. As shown in FIG. 11, a user may select attribute 31 (type) of target object 10 instead of selecting the basic shape itself. In such a case as well, the display order of a plurality of attributes 31 may be determined according to the priorities determined by controller 300. When an attribute is selected, the basic shape that is predetermined and associated with the attribute is selected. It should be noted that the correspondence between attributes and the basic shapes is, for example, similar to the example shown in FIG. 9.

Furthermore, both the selection of the attribute and the selection of the basic shape may be combined. For example, when an attribute is selected on the screen shown in FIG. 11, one or more basic shapes that are previously determined and associated with the attribute are displayed, and a user may select one of the one or more basic shapes.

FIG. 12 is a diagram showing an example of the attributes. As shown in FIG. 12, the plurality of attributes includes a cardboard box, a paper bag, a traveling bag, and the like. Furthermore, one or more basic shapes are associated with each attribute in advance.

Furthermore, information of the selected basic shape is sent to dimension measurer 400 via controller 300. Dimension measurer 400 estimates posture of the target object using the imaged image (S17). Next, dimension measurer 400 fits the selected basic shape to the three-dimensional model (S18).

FIG. 13 is a diagram for illustrating fitting processing. As shown in FIG. 13, dimension measurer 400 calculates, while performing geometric transformations such as movement, rotation, and enlargement/reduction in each axis direction on selected basic shape 32, a difference between three-dimensional model 20 and basic shape 32 in each state. For example, a sum of distances between each point included in three-dimensional model 20 and basic shape 32 is calculated as an error. Dimension measurer 400 outputs basic shape 32 with the smallest calculated error as basic shape 33 that has undergone the fitting processing. It should be noted that the sum of distances may exclude abnormal values or outliers.

Alternatively, when the calculated error becomes smaller than a predetermined threshold value, dimension measurer 400 may output basic shape 32 in this state as a model of basic shape 33 that has undergone the fitting processing, and terminate the processing. FIG. 14 is a diagram showing an example of three-dimensional model 20 and basic shape 33 that has undergone the fitting processing.

Furthermore, three-dimensional model 20 to be subjected to the fitting processing may be entirety of the generated three-dimensional model, or may be a part of the three-dimensional model. Some regions of this three-dimensional model may be selected by a user or may be selected automatically. For example, dimension measurer 400 may select points belonging to the same attribute based on the extracted attribute information.

Furthermore, estimated posture of the target object may be used as an initial value or/and constraint condition for the fitting processing. For example, dimension measurer 400 may set the initial value of rotation to match the estimated posture of the target object. Alternatively, dimension measurer 400 may restrict a range of the geometric transformation to a predetermined range from the estimated posture of the target object. This can reduce a volume of calculation and improve the accuracy of the fitting.

Next, dimension measurer 400 measures dimensions of target object 10 using basic shape 33 that has undergone the fitting processing (S19). FIG. 15 is a diagram showing an example of the dimension measurement using basic shape 33 that has undergone the fitting processing. For example, as shown in FIG. 15, dimension measurer 400 measures the width, height, and depth of target object 10. The measurement target (width, height, depth, etc.) may be determined in advance for each basic shape or attribute, for example. Alternatively, the measurement target may be specified by a user. An obtained measurement result is sent to controller 300, and controller 300 outputs the measurement result as dimension information to user interface 500 (S20). Finally, user interface 500 displays dimensions 12 of target object 10 (golf bag), for example, as shown in FIG. 2 (S21).

FIG. 16 is a flowchart showing a flow of processing in dimension measurer 400. First, dimension measurer 400 obtains a plurality of images of the target object, which are shot from different viewpoints (S41). Next, dimension measurer 400 performs the above-described preprocessing on the plurality of obtained images (S42). Then, dimension measurer 400 generates a three-dimensional model by performing three-dimensional reconstruction using the plurality of preprocessed images (S43). Furthermore, dimension measurer 400 generates attribute information indicating the attribute (type) of the target object, using a plurality of images (S44). For example, attribute information extractor 404 determines an attribute of the target object in the image using a known image recognition technique.

Dimension measurer 400 estimates posture of the target object using an imaged image (S45). It should be noted that the posture estimation (S45) may be performed at any timing after S42 as long as the posture estimation is performed before the fitting processing (S47).

Dimension measurer 400 then selects one from a plurality of candidates of the basic shape (S46). FIG. 17 is a flowchart showing this selection processing. First, dimension measurer 400 sets priorities of a plurality of candidates of the basic shape based on the attribute information obtained through the image recognition (S51). Then, dimension measurer 400 displays the plurality of candidates of the basic shape to a user based on the set priorities (S52). For example, dimension measurer 400 displays the plurality of candidates of the basic shape so that a candidate of the basic shape with higher priority is more likely to be selected by a user. Alternatively, dimension measurer 400 displays only candidates whose priorities are higher than a predetermined threshold value among the plurality of candidates of the basic shape. Next, dimension measurer 400 obtains information of the basic shape selected by a user from among the displayed plurality of candidates of the basic shape (S53).

Dimension measurer 400 then fits the selected basic shape to the three-dimensional model (S47). Then, dimension measurer 400 measures dimensions of the target object using the basic shape that has been fitted (S48).

As described above, dimension measurement device 100 according to the present embodiment fits a basic shape to a three-dimensional model of a target object, and measures the dimensions of the target object using the basic shape that has been fitted. Accordingly, the dimensions of any part of the target object can be easily measured. For example, in the golf bag described above, the dimensions excluding a handle portion can be accurately measured.

In this embodiment, a user selects a basic shape to be used for fitting from a plurality of candidates of the basic shape. With the selection, accuracy of the fitting can be improved, thereby improving the accuracy of the dimension measurement. Furthermore, the basic shape is selected by the user, thereby improving the accuracy in selection of the basic shape. Therefore, the accuracy of the fitting can be improved.

Priorities are set to candidates using the image recognition or the like, thereby improving convenience for the user and reducing selection mistakes made by the user. Accordingly, fitting accuracy can be improved.

Hereinafter, variations of the present embodiment will be described. A plurality of processors included in dimension measurement device 100 may be included in a plurality of devices. For example, dimension measurement device 100 may not include imager 200 and may obtain a plurality of images from an external device. Furthermore, the plurality of images may be a plurality of images shot by a plurality of fixed cameras. Furthermore, the plurality of images may be images from two viewpoints, which are shot from one position using a stereo camera. Still furthermore, the plurality of images may be a plurality of frames included in a moving image shot by a single camera while moving. In addition, the plurality of images may be a combination of these images.

Dimension measurement device 100 may not include reconstructor 403 and may obtain a three-dimensional model from an external device. Furthermore, the three-dimensional model is not limited to one generated from a plurality of images, and point cloud data obtained by a laser sensor such as light detection and ranging (LiDAR) may be used. In addition, a part of the functions of dimension measurement device 100 may be included in a point cloud data generation device such as the laser sensor.

Although an example has been described in which the basic shape is selected by a user in the above description, the basic shape may be automatically selected. For example, the following methods may be used.

(1) Dimension measurement device 100 may select a basic shape that is associated in advance with an attribute of the target object, based on attribute information obtained by image recognition or the like.
(2) Dimension measurement device 100 may detect a position of dimension measurement device 100 or a position of a target object, and select a basic shape that is associated in advance with the detected position. Dimension measurement device 100 may include a position detector such as a global positioning system (GPS). For example, if dimension measurement device 100 or the target object is located in a warehouse, dimension measurement device 100 may determine that the target object is a box, and may select a rectangular parallelepiped as the basic shape. In other words, dimension measurement device 100 may select a predetermined basic shape when the position of dimension measurement device 100 or the target object is included in a predetermined area. It should be noted that a plurality of basic shapes may be associated with one region. That is, dimension measurement device 100 may narrow down candidates from a plurality of basic shapes, based on the position of dimension measurement device 100 or the target object. In such a case, the basic shape to be used is selected from a plurality of basic shapes associated with the area, by user selection or other methods.
(3) A method other than the image recognition may be used to determine the attribute information. For example, at the time of collection of a delivery target object, information of the delivery target object (including attribute information) may be registered in advance. In such a case, an attribute of the target object may be determined based on the information. Furthermore, if an address of a collection destination is registered in the information of the delivery target object, and the position information of dimension measurement device 100 matches the address, the basic shape corresponding to the attribute information of the delivery target object may be selected.
(4) Dimension measurement device 100 may actually perform fitting processing on each of the plurality of basic shapes, and determine the basic shape to be finally used, based on the obtained results. Specifically, dimension measurement device 100 may calculate, for each basic shape, the minimum value of an error in the fitting between the three-dimensional model and the basic shape described above (i.e., an error between the three-dimensional model and the basic shape that has been fitted), and may select the basic shape having the smallest fitting error among the plurality of calculated fitting errors. When the above-described minimum fitting error is less than a predetermined threshold value, dimension measurement device 100 may select a basic shape having the minimum fitting error. When the minimum fitting error is greater than or equal to the threshold value, dimension measurement device 100 may determine that there is no basic shape that fits the three-dimensional model, and may display that there is no basic shape that fits the three-dimensional model. The error may be a least squares error.
(5) The above-described methods may be combined. For example, candidates of the basic shape may be narrowed down using any of the methods (1) to (3) above, and the basic shape to be finally used may be determined using the method (4) above.
(6) The priorities of a plurality of candidates may be determined by any of the above methods, and then a user may perform selection.
(7) A user may set whether the basic shape is automatically selected or selected by the user. Alternatively, if automatic selection allows narrowing down to one basic shape, the automatic selection is used, and if it is not possible to narrow down to one basic shape, the user selection may also be used. Alternatively, if accuracy cannot be obtained with the automatic selection, the selection may be switched to the user selection. For example, if the fitting error obtained by the automatic selection is larger than a predetermined threshold value, the selection may be switched to the user selection.
(8) In the dimension measurement, dimension measurement device 100 may measure the dimensions of a cube (basic shape) circumscribing the target object. In such a case, dimension measurement device 100 may perform the fitting so that an error resulting from the fitting of a portion of the target object, which circumscribes the cubic body, is smaller than errors of other portions. For example, when a sum of the distances between each point included in a three-dimensional model and the basic shape is calculated as the error, a distance corresponding to the portion circumscribing the three-dimensional target object may be multiplied by a weighting coefficient that is larger than distances corresponding to other portions.

As described above, dimension measurement device 100 according to the present embodiment performs the processing shown in FIG. 18. Dimension measurement device 100 obtains a three-dimensional model of the target object (S61), selects one from a plurality of basic shapes that are candidates of the three-dimensional shape (S62), fits the selected basic shape to the three-dimensional model (S63), and measures dimensions of the target object using the basic shape that has been fitted (S64). With this configuration, dimension measurement device 100 fits the basic shape selected from a plurality of candidates of the three-dimensional shape of the target object to the three-dimensional model, and performs dimension measurement using the basic shape that has been fitted, thereby improving accuracy in the measurement.

For example, as shown in FIGS. 10 and 11, dimension measurement device 100 causes a display (for example, a display included in user interface 500) to present a display content for a user to specify one of a plurality of basic shapes, and selects one from a plurality of basic shapes based on information specified by the user via an input interface (a touch panel, a mouse, a keyboard, etc. included in user interface 500, for example). With this configuration, dimension measurement device 100 can select the basic shape to be fitted based on the user's selection, and thus can easily improve the accuracy of the fitting. Therefore, the accuracy of the dimension measurement using the basic shape that has been fitted can be improved.

For example, as shown in FIG. 10, for example, the display content is for a user to specify a three-dimensional shape of the target object, and dimension measurement device 100 selects a basic shape of the three-dimensional shape specified by a user via the input interface from a plurality of basic shapes. With this configuration, a basic shape suitable for the fitting can be selected with high accuracy by the user directly specifying the shape.

For example, as shown in FIG. 11, the display content is for a user to specify a type of the target object, and dimension measurement device 100 selects, from a plurality of basic shapes, a basic shape that is associated in advance with a type specified by the user via the input interface. With this configuration, a user can intuitively perform the selection operation, thereby improving the user's convenience.

For example, dimension measurement device 100 determines a type of the target object based on the image recognition carried out on an image of the target object, and selects a basic shape that is associated in advance with the determined type from a plurality of basic shapes. With this configuration, dimension measurement device 100 can automatically select the basic shape without depending on the input by a user.

For example, dimension measurement device 100 selects, from a plurality of basic shapes, a basic shape that is associated in advance with a location where the target object or the dimension measurement device is present. With this configuration, dimension measurement device 100 can automatically select the basic shape without depending on the input by a user.

For example, dimension measurement device 100 selects one of a plurality of basic shapes based on results (errors, for example) of the fitting of the three-dimensional model to each of the plurality of basic shapes. With this configuration, dimension measurement device 100 can automatically select the basic shape without depending on the input by a user.

For example, dimension measurement device 100 determines posture of the target object, and fits the three-dimensional model to the selected basic shape, using the determined posture. For example, dimension measurement device 100 uses the determined posture as a constraint condition or/and an initial condition. With this configuration, dimension measurement device 100 can reduce a processing volume of the fitting processing or improve the accuracy of the fitting processing.

For example, dimension measurement device 100 includes a processor and memory. The processor performs the above processing using the memory.

Although the dimension measurement device and the like according to the embodiments of the present disclosure have been described above, the present disclosure is not limited to the embod iments.

Each processor included in the dimension measurement device and the like according to the above embodiments is typically embodied as a large scale integration (LSI) chip that is an integrated circuit. The processors may be integrated into a single chip individually, or may be integrated into a single chip including some or all of them.

Circuit integration is not limited to the LSI, and may be embodied using a dedicated circuit or a general-purpose processor. A field programmable gate array (FPGA) that can be programmed after the LSI chip is manufactured, or a reconfigurable processor that can reconfigure the connections and settings of circuit cells inside the LSI chip may be used.

In each of the above embodiments, each structural component may be configured with dedicated hardware, or may be embodied by executing a software program suitable for each structural component. Each structural component may be embodied by a program executor such as a CPU or a processor reading and executing a software program recorded on a recording medium such as a hard disk or a semiconductor memory.

The present disclosure may be embodied as a dimension measurement method or the like executed by a dimension measurement device or the like.

The division of functional blocks in the block diagrams is an example. A plurality of functional blocks may be embodied as a single functional block, a single functional block may be divided into a plurality of functional blocks, or some functions may be moved to other functional blocks. Furthermore, functions of a plurality of functional blocks having similar functions may be processed in parallel or in a time-sharing manner by a single piece of hardware or software.

The order of execution of the steps included in the flowchart is merely an example for specifically describing the present disclosure, and may be an order other than the above. Furthermore, some of the above steps may be executed simultaneously (in parallel) with other steps.

Although the dimension measurement device and the like according to one or more aspects have been described above based on the embodiments, the present disclosure is not limited to the embodiments. Unless departing from the spirit of the present disclosure, embodiments obtained by applying various modifications that are conceivable by those skilled in the art and embodiments configured by combining structural components of different embodiments may be included within the scope of one or more aspects.

### [Industrial Applicability]

The present disclosure can be applied to a dimension measurement device.

### [Reference Signs List]

- 10: target object
- 11: user
- 12: dimension
- 20: three-dimensional model
- 30, 32: basic shape
- 31: attribute
- 33: basic shape that has been fitted
- 100: dimension measurement device
- 200: imager
- 211: storage
- 212: controller
- 213: optical system
- 214: image sensor
- 300: controller
- 301: image controller
- 302: UI controller
- 303: dimension measurement controller
- 304: storage
- 400: dimension measurer
- 401: image obtainer
- 402: preprocessor
- 403: reconstructor
- 404: attribute information extractor
- 405: posture estimator
- 406: fitter
- 407: measurer
- 500: user interface

## Claims

1. A dimension measurement device comprising:
a processor; and
memory, wherein
using the memory, the processor:
obtains a three-dimensional model of a target object;
selects a basic shape from a plurality of basic shapes, each of the plurality of basic shapes being a corresponding candidate of a three-dimensional shape;
fits the basic shape selected to the three-dimensional model; and
measures a dimension of the target object using the basic shape that has been fitted.

2. The dimension measurement device according to claim 1, wherein
the processor:
causes a display to display a display content for a user to specify a basic shape from the plurality of basic shapes; and
selects the basic shape from the plurality of basic shapes based on information specified by the user via an input interface.

3. The dimension measurement device according to claim 2, wherein
the display content is for the user to specify the three-dimensional shape of the target object, and
the processor selects a basic shape of the three-dimensional shape from the plurality of basic shapes, the basic shape being specified by the user via the input interface.

4. The dimension measurement device according to claim 2, wherein
the display content is for the user to specify a type of the target object, and
the processor selects, from the plurality of basic shapes, a basic shape that is associated in advance with the type specified by the user via the input interface.

5. The dimension measurement device according to claim 1, wherein
the processor:
determines a type of the target object based on image recognition carried out on an image of the target object; and
selects, from the plurality of basic shapes, a basic shape that is associated in advance with the type determined.

6. The dimension measurement device according to claim 1, wherein
the processor selects, from the plurality of basic shapes, a basic shape that is associated in advance with a location where the target object or the dimension measurement device is present.

7. The dimension measurement device according to claim 1, wherein
the processor selects a basic shape from the plurality of basic shapes, based on a result of fitting of the three-dimensional model to each of the plurality of basic shapes.

8. The dimension measurement device according to any one of claims 1 to 7, wherein
the processor:
determines posture of the target object; and
fits the three-dimensional model to the basic shape selected, using the posture determined.

9. A dimension measurement method comprising:
obtaining a three-dimensional model of a target object;
selecting a basic shape from a plurality of basic shapes, each of the plurality of basic shapes being a corresponding candidate of a three-dimensional shape;
fitting the basic shape selected to the three-dimensional model; and
measuring a dimension of the target object using the basic shape that has been fitted.

10. A program for causing a computer to execute the dimension measurement method according to claim 9.
